# EUROPÄISCHE PATENTSCHRIFT

(11) **EP 2 487 066 B1**
(45) Veröffentlichungstag und Bekanntmachung des Hinweises auf die Patenterteilung: **18.01.2017**
(21) Anmeldenummer: 12000606.9
(22) Anmeldetag: 31.01.2012
(51) Int. Cl.: B60P 1/44

(54) **Verfahren zum Steuern einer Hubladebühne**
Method for controlling a cantilever lift
Procédé destiné à la commande d'une plate-forme de chargement par levage

(30) Priorität: 11.02.2011 DE 102011011085
(43) Veröffentlichungstag der Anmeldung: 15.08.2012
(73) Patentinhaber: Palfinger Tail Lifts GmbH, 27777 Ganderkesee (DE)
(72) Erfinder: Bley, Hubert, 49681 Garrel (DE); Popken, Uwe, 26209 Hatten (DE)
(74) Vertreter: Möller, Friedrich

(56) Entgegenhaltungen:
- EP-A1- 0 773 136
- EP-A1- 0 832 781
- EP-A1- 1 719 661
- WO-A1-01/14167
- DE-A1-102006 062 231
- DE-A1-102009 052 662

## Beschreibung

Die Erfindung betrifft ein Verfahren zum Steuern einer eine Ladeplattform aufweisenden Hubladebühne gemäß dem Oberbegriff des Anspruchs 1.

Hubladebühnen dienen dazu, das Be- und Entladen von Fahrzeugen mit insbesondere schweren Gegenständen zu erleichtern. Dazu verfügen die Hubladebühnen über eine vorzugsweise an der Rückseite eines Fahrzeugaufbaus schwenk-, heb- und senkbar angelenkte Ladeplattform.

Zum Be- und Entladen wird die in einer Ruhestellung hinter dem Fahrzeugaufbau hochgeschwenkte Ladeplattform heruntergeschwenkt in eine horizontale oder nahezu horizontale Schwenkposition. Durch Absenken der so heruntergeklappten Ladeplattform können die zu entladenden Gegenstände vom Niveau des Fahrzeugaufbaus auf ein niedriges Niveau, insbesondere ein Bodenniveau, gebracht werden.

Die Ladeplattform ist von der Seite gesehen keilförmig ausgebildet mit einer hinteren Spitze an der freien, hinteren Querkante der Ladeplattform. Infolge der Keilform muss die Ladeplattform nach dem Absenken auf den Boden erneut verschwenkt werden, damit ihre Spitze im Wesentlichen übergangslos am Boden anliegt (Bodenangleichung). Vor dem erneuten Hochfahren muss die Bodenangleichung der Ladeplattform wieder rückgängig gemacht werden durch ein Zurückschwenken, damit die Spitze vom Boden abgehoben wird und die obere Nutzfläche der Plattform wieder eine horizontale oder nahezu horizontale Schwenkposition einnimmt. Das ist zeitaufwendig und erfordert vom Bediener viel Geschick und Erfahrung.

Es ist bereits aus der EP 0 773 136 A1 eine Hubladebühne bekannt, bei der die Bodenangleichung durch eine entsprechende Steuerung automatisch rückgängig gemacht wird. Dazu ist die Hubladebühne, insbesondere die Ladeplattform, mit mindestens einem entsprechenden Sensor, zum Beispiel einem Messwert- oder Winkelgeber, versehen. Problematisch ist hierbei jedoch, dass die Ladeplattform beim Beladen mit insbesondere schweren Gegenständen ihre anfangs manuell eingestellte und in der Steuerung abgespeicherte Schwenkposition verändert, sich nämlich die Spitze absenkt. Das führt zu unterschiedlichen Schwenkpositionen, wodurch nicht die ursprüngliche Schwenkposition automatisch wieder angefahren wird.

Aus der DE 10 2009 052 662 A1 und der DE 10 2006 062 231 A1 sind Hubladebühnen bekannt, die mit Winkelgebern an der Ladeplattform versehen sind. Die Winkelgeber messen bei bewegter Ladeplattform durch wiederholte Messungen die aktuelle Position derselben. Beispielsweise wird so eine vorgegebene Schwenkposition der Ladeplattform automatisch angefahren. Bei diesen bekannten Hubladebühnen ist es nicht vorgesehen, einen eingestellten Schwenkwinkel, der später automatisch wieder angefahren werden soll, auch durch Winkelgeber zu ermitteln. Hierbei tritt das Problem auf, dass der Winkelgeber beim Stoppen des Schwenkvorgangs, insbesondere die dabei federnde Ladeplattform, in Schwingungen versetzt wird. Diese Schwingungen verfälschen den Messwert. Die Folge ist, dass die Steuerung einen falschen Schwenkwinkel anfährt.

Ausgehend vom Vorstehenden liegt der Erfindung die Aufgabe zugrunde, ein Verfahren zum Steuern einer Hubladebühne zu schaffen, das eine vorgegebene Schwenkposition, insbesondere einen vorgegebenen Schwenkwinkel, der Ladeplattform mit großer Genauigkeit ermittelt.

Ein Verfahren zur Lösung der Aufgabe weist die Maßnahmen des Anspruchs 1 auf. Dieses Verfahren sieht es vor, dass mehrere von einem Messwertgeber zeitlich nacheinander ermittelte Messwerte zum Ermitteln einer Position oder eines Winkels, vorzugsweise der Schwenkposition bzw. des Schwenkwinkels der Ladeplattform, herangezogen werden. Diese Vorgehensweise geht von der Erkenntnis aus, dass beim Herunterschwenken der Ladeplattform in die zum Beladen oder Entladen geeignete horizontale oder nahezu horizontale Schwenkposition von Bewegungen der Ladeplattform der jeweilige Messwertgeber in Schwingungen versetzt wird, die nur relativ langsam abklingen. Ein einzelner erfasster Messwert würde dadurch verfälscht. Indem erfindungsgemäß in zeitlicher Aufeinanderfolge mehrere Messwerte ermittelt werden, können daraus die exakte Schwenkposition, insbesondere der exakte Schwenkwinkel, rechnerisch ermittelt werden.

Die Ermittlung der Schwenkposition kann nach verschiedenen mathematischen Methoden erfolgen, stets mit dem Ziel, die verschiedenen Schwingungszustände, insbesondere mehr und mehr abgeklungenen Schwingungen, des mindestens einen Messwertgebers bei der Messung zu berücksichtigen und zur Ermittlung des exakten Schwenkwinkels oder der exakten Schwenkposition zu eliminieren. Auch wenn die Schwingungen noch nicht ganz abgeklungen sind, lässt sich insbesondere der Schwenkwinkel so genau ermitteln und in der Steuerung abspeichern zur nachfolgenden automatischen Steuerung der Ladeplattform.

Eine vorteilhafte Weiterbildung des zuvor beschriebenen Verfahrens sieht es vor, die zeitlich aufeinanderfolgenden Messwerte von mindestens einem Messwertgeber zu ermitteln, während die Ladeplattform weder verschwenkt noch angehoben oder abgesenkt wird. Die Ermittlung des Messwerts erfolgt so bei momentan unbetätigter Ladeplattform. Vorzugsweise ist weiterhin vorgesehen, die zeitlich aufeinanderfolgenden Messwerte von dem mindestens einen Messwertgeber nach dem manuellen Verschwenken der Ladeplattform in eine horizontale oder nahezu horizontale Position bei noch unbeladener Ladeplattform aufzunehmen.

Bevorzugt ist das Verfahren so weitergebildet, dass die Schwenkposition manuell angefahren wird. Beim Erreichen der gewünschten Schwenkposition oder des gewünschten Schwenkwinkels wird eine Zeit lang gewartet und danach vom Messwertgeber innerhalb einer bestimmten Zeitspanne mehrmals nacheinander in direkter Aufeinanderfolge oder mit zeitlichen Abständen Messwerte aufgenommen und hieraus rechnerisch mindestens annähernd die Schwenkposition bzw. der Schwenkwinkel errechnet. Dieser errechnete Schwenkwinkel oder die Schwenkposition werden dann in der Steuerung abgespeichert und später vorzugsweise wiederholt von der Steuerung angefahren. Insbesondere erfolgen die geschilderten Vorgänge bei noch unbeladener Ladeplattform. Die Verfahrensweise eliminiert Ungenauigkeiten bei der Ermittlung der Schwenkposition bzw. des Schwenkwinkels, die durch beim Stoppen des Schwenkvorgangs der Ladeplattform hervorgerufene Schwingungen mindestens des jeweiligen Messwertgebers, insbesondere Winkelwertgebers, entstehen. Trotz dieser Schwingungen ermöglicht das erfindungsgemäße Verfahren die Ermittlung und Abspeicherung eines exakten oder zumindest nahezu exakten Schwenkwinkels der Ladeplattform. Die Messung erfolgt während des Abklingens der Schwingungen des mindestens einen Messwertaufnehmers, wobei die Messungen abgeschlossen sein können, bevor die Schwingungen vollständig abgeklungen sind, weil durch die zeitlich aufeinanderfolgenden wiederholten Messungen das Abklingverhalten der Schwingungen des mindestens einen Messwertaufnehmers insbesondere tendenziell berücksichtigt wird und so rechnerisch die Schwenkposition bzw. der Schwenkwinkel ohne Verfälschung der beim Messen noch nicht abgeklungenen Schwingungen des Messwertaufgebers, insbesondere Winkelwertgebers, ermittelbar sind.

Gegebenenfalls ist es vorgesehen, die manuell angefahrene Schwenkposition, insbesondere den manuell angefahrenen Schwenkwinkel, der unbeladenen Ladeplattform zu ermitteln. Es wird dann die Schwenkposition ermittelt, bevor sie vom Gewicht eines oder mehrerer Gegenstände, womit die Ladeplattform beladen worden ist, verfälscht wird durch eine vom Gewicht der Ladung der Ladeplattform herbeigeführte Einfederung derselben und die sich dadurch verändernde Schwenkposition, insbesondere eine Veränderung des Schwenkwinkels. Wenn nach dem Entladen der auf den Boden abgesenkten Ladeplattform die dazu durchgeführte Bodenangleichung durch das automatische Zurückschwenken wieder rückgängig gemacht wird, erfolgt insbesondere bei leerer Ladeplattform ein genaues Anfahren der vorher manuell angefahrenen und in einer Steuerung abgespeicherten Schwenkposition bzw. des Schwenkwinkels der Ladeplattform. Dadurch ist es nicht erforderlich, bei sich ändernder Beladung oder unbeladener Ladeplattform die automatisch wieder angefahrene Schwenkposition, insbesondere den automatisch angefahrenen Schwenkwinkel, manuell zu korrigieren.

Vorzugsweise ist das Verfahren so ausgebildet, dass die Schwenkposition oder der Schwenkwinkel vor dem Absenken der Ladeplattform ermittelt wird, wenn die Ladeplattform beladen abgesenkt wird, wohingegen die Schwenkposition erst nach dem Absenken der Ladeplattform ermittelt wird, wenn diese unbeladen abgesenkt wird. Bei dieser Vorgehensweise steht genügend Zeit zur exakten Ermittlung der Schwenkposition bzw. Schwenkwinkels der Ladeplattform zur Verfügung, wenn diese im noch nicht abgesenkten Zustand vom Fahrzeug aus beladen wird. Das Ermitteln des exakten Schwenkwinkels verzögert dadurch die Beladung der Ladeplattform vom Fahrzeug aus nicht. Wenn hingegen die Ladeplattform unbeladen abgesenkt wird, steht nicht genügend Zeit zur Ermittlung oder Abspeicherung der exakten Schwenkposition oder des exakten Schwenkwinkels zur Verfügung. Dann erfolgt die Ermittlung der Schwenkposition oder des Schwenkwinkels erst nach dem Absenken der Ladeplattform auf den Boden, aber vor dem anschließenden Verschwenken der Ladeplattform zur Herbeiführung der Bodenangleichung. Wenn die Ladeplattform im leeren Zustand auf den Boden abgesenkt ist, kann die Schwenkposition, insbesondere der Schwenkwinkel, sehr rasch ermittelt werden, weil infolge des Aufliegens mindestens eines Teils der Ladeplattform auf den Boden die Sensoren, insbesondere Winkelsensoren oder Winkelgeber, nicht schwingen und der Messwert mit einer Messung sogleich zuverlässig ermittelbar ist. Die Ermittlung der Schwenkposition bzw. des Schwenkwinkels der auf den Boden abgesenkten Ladeplattform lässt bei leerer Plattform eine sofortige Bodenangleichung zu, ohne dass gewartet werden muss, bis eine exakte Schwenkposition bzw. ein exakter Schwenkwinkel ermittelbar ist.

Eine weitere bevorzugte Ausgestaltung des Verfahrens sieht es vor, dass dann, wenn nach dem Erreichen der Schwenkposition die Ladeplattform innerhalb einer bestimmten Zeitspanne abgesenkt wird, die Schwenkposition bzw. der Schwenkwinkel bei auf den Boden abgesenkter Ladeplattform ermittelt wird. Auf diese Weise erhält die Steuerung Informationen darüber, ob sie den Schwenkwinkel vor dem Absenken der Ladeplattform oder nach dem Absenken der Ladeplattform bis auf den Boden ermitteln kann. Die Wahl der jeweils vorzunehmenden, unterschiedlichen Ermittlungsweisen der Schwenkposition oder Schwenkwinkels kann somit ohne nennenswerten zusätzlichen Aufwand erfolgen, vor allem allein durch die Steuerung.

Eine andere vorteilhafte Ausgestaltung des Verfahrens sieht es vor, dass dann, wenn die Ladeplattform in der Schwenkposition eine bestimmte Zeitspanne von vorzugsweise 5 bis 15 Sekunden verbleibt, also in dieser Zeitspanne nicht abgesenkt wird, die Schwenkposition vor dem Absenken der Ladeplattform ermittelt wird. Diese Vorgehensweise geht von der Erkenntnis aus, dass das Beladen der Ladeplattform vom Fahrzeug eine längere Zeit in Anspruch nimmt, die in jedem Fall größer ist als 15 Sekunden. Dann verbleibt die Ladeplattform während ihrer Beladung in der horizontalen oder nahezu horizontalen Schwenkposition. Stellt ein Zeitglied dieses fest, wird die Zeit, bis der Gegenstand auf die Ladeplattform geladen ist, genutzt, um vom Messwertgeber, insbesondere Winkelgeber, die Schwenkposition, insbesondere den Schwenkwinkel der unbeladenen Ladeplattform, zu ermitteln. Vorzugsweise wird nach dem Anfahren der Schwenkposition der Ladeplattform etwas gewartet, bis die Messung der Schwenkposition bzw. des Schwenkwinkels der Ladeplattform beginnt, und zwar vorzugsweise bis zu 5 Sekunden. Dann werden bevorzugt mehrere zeitlich aufeinanderfolgende Messungen durchgeführt, wobei während dieser Messungen Schwingungen des Messwertgebers oder Winkelaufnehmers mehr und mehr abklingen. Es kann so durch Mittelwertbildung, Interpolation oder andere statistische Rechenoperationen die Schwenkposition bzw. der Schwenkwinkel ermittelt werden, der auch vor dem vollständigen Abklingen der Schwingungen dem exakten oder nahezu exakten Wert der Schwenkposition oder des Schwenkwinkels entspricht.

Gemäß einer bevorzugten Ausgestaltung des Verfahrens wird die ermittelte und in der Steuerung abgespeicherte Schwenkposition oder der Schwenkwinkel bei der Rückgängigmachung der Bodenangleichung und vor dem Anheben der Beladeplattform vom Boden durch die Steuerung automatisch wieder angefahren. Es wird dabei diejenige Schwenkposition oder derjenige Schwenkwinkel angefahren, der der unbeladenen Ladeplattform entspricht. Wenn die Ladeplattform demnach, was beim Entladen eines Fahrzeugs üblich ist, unbeladen wieder hochgefahren wird, nimmt nach dem Hochfahren die Ladeplattform wieder den manuell eingestellten Schwenkwinkel oder die Schwenkposition der unbeladenen Ladeplattform ein.

Die Erfindung sieht es bevorzugt vor, den Schwenkwinkel der zum Beladen in eine horizontale oder nahezu horizontale Position aufgeschwenkten leeren Ladeplattform von mindestens einem Winkelgeber oder Winkelsensor zu ermitteln. Es handelt sich dabei um den manuell von der Bedienungsperson zu Anfang des Be- oder Entladevorgangs des Fahrzeugs angefahrenen Schwenkwinkel der unbeladenen Ladeplattform.

Vorzugsweise wird ein Winkelgeber oder ein vergleichbarer den Schwenkwinkel der Ladeplattform ermittelnder Messwertgeber bzw. Sensor verwendet, so dass Winkelwerte der Schwenkposition der Ladeplattform ermittelbar sind. Vorzugsweise wird bei unbetätigter und unbeladener Ladeplattform anhand der vom Winkelgeber oder einem sonstigen Sensor ermittelten Winkelwerte, insbesondere Schwenkwinkelwerte, durch Mittelwertbildung der manuell angefahrene Schwenkwinkel der Ladeplattform genau ermittelt, wobei durch das erfindungsgemäße Verfahren Schwingungen des Winkelgebers oder eines sonstigen Messwertgebers ganz oder zumindest größtenteils eliminiert werden.

Ein bevorzugtes Ausführungsbeispiel der Erfindung wird nachfolgend anhand der Zeichnung näher erläutert. In dieser zeigen:
- Fig. 1: eine Seitenansicht eines hinteren Teils eines Fahrzeugs mit einer Hublade-bühne bei in eine Schwenkposition herunterschwenkter Ladeplattform,
- Fig. 2: eine schematische Seitenansicht gemäß der Fig. 1 bei manuell in die Schwenkposition heruntergeschwenkter unbeladener Ladeplattform,
- Fig. 3: eine Darstellung analog zur Fig. 2 bei vom Fahrzeug aus beladener Ladeplattform,
- Fig. 4: eine Darstellung analog zur Fig. 2 bei beladener und auf den Boden abgesenkter Ladeplattform,
- Fig. 5: eine Darstellung analog zur Fig. 2 bei einer beladenen Ladeplattform nach der Bodenangleichung,
- Fig. 6: eine Darstellung analog zur Fig. 2 mit entladener Ladeplattform und rückgängig gemachter Bodenangleichung,
- Fig. 7: eine schematische Seitenansicht einer manuell in eine Schwenkposition gefahrener Ladeplattform,
- Fig. 8: eine Darstellung analog zur Fig. 7 bei auf den Boden abgesenkter leerer Ladeplattform vor der Bodenangleichung,
- Fig. 9: eine Darstellung analog zur Fig. 7 mit der vollständig nach der Bodenangleichung auf dem Boden anliegender Ladeplattform nach dem Beladen,
- Fig. 10: eine Darstellung analog zur Fig. 7 mit der beladenen Ladeplattform nach der automatischen Rückgängigmachung der Bodenangleichung, und
- Fig. 11: eine Darstellung analog zur Fig. 7 mit in die ursprüngliche Schwenkposition zurückgekehrter, hochgefahrener Ladeplattform vor dem Entladen.

Die Figuren zeigen eine an der Rückseite des Aufbaus eines teilweise dargestellten Fahrzeugs 10 montierte Hubladebühne 11. Die Hubladebühne 11 verfügt über eine ebene Ladeplattform 12 und ein Hubwerk 13. Das Hubwerk 13 ist mit einer starren Traverse 14 am Rahmen des Fahrzeugs 10 verbunden. Das Hubwerk 13 ist nach dem Parallelogrammprinzip aufgebaut, besteht nämlich im gezeigten Ausführungsbeispiel aus zwei auf gegenüberliegenden Seiten des Hubwerks 13 angeordnete Parallelogrammlenkerpaare mit jeweils zwei Lenkarmen. Die Parallelogrammlenkerpaare sind durch Druckmittelzylinder 15, 16, vorzugsweise Hydraulikzylinder, bewegbar. Die Druckmittelzylinder 15 und 16 dienen einerseits zum Schwenken und andererseits zum Anheben und Absenken der Ladeplattform 12.

Die Ladeplattform 12 weist in einer in den Figuren dargestellten Seitenansicht eine keilförmige Gestalt auf. Die Ladeplattform 12 verjüngt sich zu einer freien, quer zur Fahrtrichtung des Fahrzeugs 10 verlaufenden Querkante. Dadurch entsteht an der in Fahrtrichtung gesehen hinteren, freien Querkante der Ladeplattform 12 eine Spitze 20, die es ermöglicht, den Gegenstand 21 vom Boden 22 im Wesentlichen übergangslos zu be- oder entladen.

An einer Seite des Fahrzeugs 10 ist in der Nähe der Hubladebühne 11 ein Bedienteil 17 vorgesehen, womit eine Bedienungsperson manuell die Hubladebühne 11 betätigen kann durch entsprechendes Verschwenken, Abheben und Absenken der Ladeplattform 12.

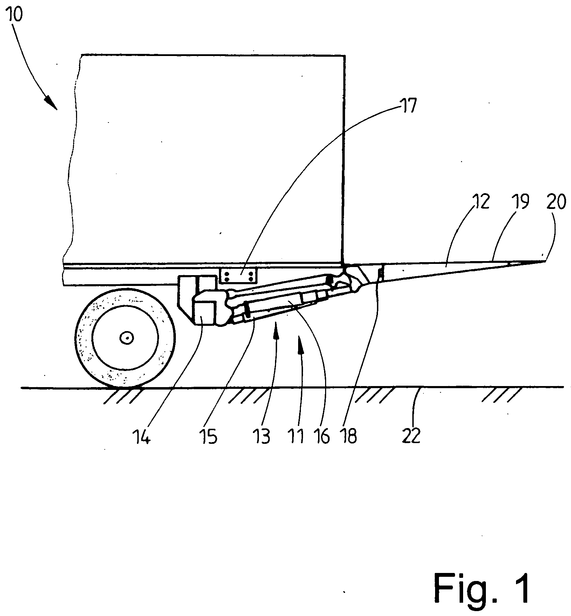

Mindestens der Ladeplattform 12 ist wenigstens ein Messwertgeber oder Sensor zugeordnet, bei dem es sich vorzugsweise um einen Winkelgeber 18 handelt. Es können auch mehrere Winkelgeber 18 vorgesehen sein. Alternativ kann mindestens ein Winkelgeber am Hubwerk 13, beispielsweise den Lenkerarmen, vorgesehen sein. Gegebenenfalls kann es sich hierbei aber auch um zusätzliche Winkelgeber 18 handeln. Die Winkelgeber 18 sind bevorzugt als Mikrosensoren ausgebildet, die ein mit der jeweiligen Neigung der Ladeplattform 12 sich proportional änderndes elektrisches Signal abgeben. Das jeweilige Signal mindestens des Winkelgebers 18 wird an eine nicht gezeigte Steuerung übertragen, die aus den elektrischen Signalen einen Winkel der oberen Nutzfläche 19 zur Horizontalen ermittelt. Insbesondere wird eine Schwenkposition, und zwar ein Schwenkwinkel, ermittelt, den die Ladeplattform 12 einnimmt, indem sie manuell in die in den Fig. 1, 2 und 7 gezeigte, etwa horizontale Schwenkposition gefahren ist, in der die Ladeplattform 12 vom Fahrzeug 10 aus mit einem Gegenstand 21 beladbar ist oder der Gegenstand 21 von der Ladeplattform 12 in den Aufbau des Fahrzeugs 10 transportierbar ist.

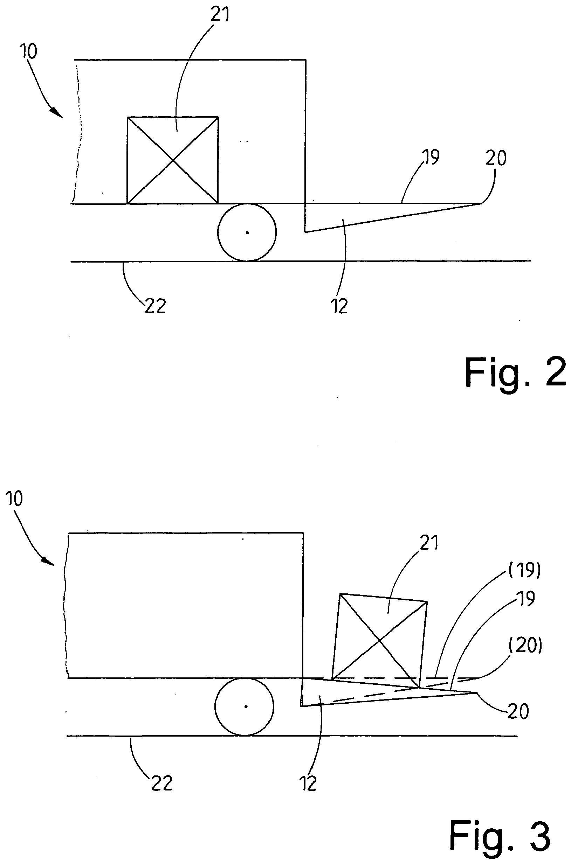

Die erfindungsgemäßen Verfahren werden nachfolgend unter Bezugnahme auf die Fig. 2 bis 11 der Zeichnung näher erläutert:
Ein erstes Verfahren sieht es vor, von einem Messwertgeber, beispielsweise dem mindestens einen Winkelgeber 18, mehrere Messwerte zeitlich nacheinander aufzunehmen und zum Ermitteln einer bestimmten Position der Ladeplattform heranzuziehen. Das erfolgt zu dem Zweck, Schwingungen des Winkelgebers 18 oder sonstiger Messwertgeber der Hubladebühne 11 zu eliminieren. So lassen sich bei noch nicht ganz abgeklungenen Schwingungen des Winkelgebers 18 oder eines sonstigen Messwertgebers zuverlässig exakte Positionen, insbesondere der Schwenkposition der Ladeplattform 12 entsprechende Winkel, ermitteln.

Die Ermittlung der Messwerte erfolgt bei nicht betätigter Ladeplattform 12, also wenn diese weder angehoben, abgesenkt noch verschwenkt wird. Die Ladeplattform 12 steht dann praktisch still. Wenn die Ladeplattform 12 beispielsweise nach dem Verschwenken gestoppt wird, kommt es zu einem geringen Federn der Ladeplattform 12, woran auch die Federung des Fahrzeugs 10 beteiligt sein kann. Die Folge ist, dass der mindestens eine Winkelgeber 18, vor allem ein zu Winkelmessungen erforderliches bewegbares Teil derselben, eine gewisse Zeitlang Schwingungen ausübt. Damit gleichwohl zuverlässige Winkelwerte ermittelbar sind, werden kurze Zeit, beispielsweise 1 bis 5 Sekunden nach dem Stoppen des Verschwenkens der Ladeplattform 12 noch während des Schwingens des Winkelgebers 18 mehrere Messwerte zeitlich nacheinander vom Winkelgeber 18 aufgenommen. Die Winkelwerte können in direkter zeitlicher Aufeinanderfolge, also ohne eine Pause zwischen aufeinanderfolgenden Messwerten, aufgenommen werden, aber auch mit zeitlichen Abständen, also Pausen zwischen der Ermittlung des jeweiligen Messwerts. Die Dauer der Messung kann insgesamt bis zu 20 Sekunden betragen. Vorzugsweise erfolgt die Messung in einem Zeitfenster von 2 bis 5 Sekunden, insbesondere etwa 3 Sekunden. In dieser Zeit kann eine größere Anzahl von Messwerten aufgenommen werden, wobei die Anzahl der Messwerte beliebig sein kann.

Durch die zeitlich aufeinanderfolgende Aufnahme mehrerer Messwerte sind die Schwingungen des bewegten Teils des Winkelgebers 18 mehr und mehr, aber vorzugsweise noch nicht ganz abgeklungen. Außerdem werden die aufeinanderfolgenden Messwerte bei unterschiedlichen Schwingungszuständen, insbesondere Amplituden, des bewegten Teils des jeweiligen Winkelgebers 18 aufgenommen. Auf diese Weise kann durch eine Mittelwertbildung aller beim Messvorgang vom Winkelgeber 18 aufgenommenen Messwerte ein Durchschnittswert gebildet werden, der tatsächlich dem zu erfassenden Winkelwert der Ladeplattform 12 entspricht, oder nahekommt, weil durch die Mittelwertbildung aus mehreren nacheinander erfolgenden Messungen bei abnehmenden Schwingungen die Schwingungen des bewegten Teils des jeweiligen Winkelgebers 18 sich eliminieren lassen und dadurch den gemessenen Winkel nicht verfälschen.

Alternativ ist es denkbar, aus den mehreren seitlich aufeinanderfolgenden Messwerten rechnerisch die Schwingungen zu analysieren und daraus iterativ bzw. empirisch den tatsächlichen Winkelwert zu ermitteln, der sich nach dem vollständigen Abklingen der Schwingungen einstellen würde.

Der in vorstehend beschriebener Weise ermittelte exakte Wert des Winkels der Ladeplattform 12 kann von der Steuerung der Hubladebühne 11 zum automatischen Anfahren verschiedenster Positionen der Ladeplattform 12 eingesetzt werden.

Bevorzugt wird das vorstehend beschriebene Verfahren für das im Folgenden näher beschriebene Verfahren zum automatischen Anfahren manuell eingestellter Schwenkwinkel der Ladeplattform 12 eingesetzt.

Zu Beginn des Be- oder Entladevorgangs des Fahrzeugs 10 wird zunächst manuell von einer Bedienungsperson mittels des Bedienteils 17 die Ladeplattform 12 von der während der Fahrt des Fahrzeugs 10 hochgeschwenkten Stellung hinter dem Fahrzeugaufbau heruntergeschwenkt in eine Schwenkposition, bei der die Nutzfläche 19 der Ladeplattform 12 horizontal oder zumindest etwa horizontal ausgerichtet ist und sich hinter der Ladefläche des Fahrzeugs 10 befindet. In dieser manuell angefahrenen Ausgangsposition, die hier als Schwenkposition bezeichnet wird, ermittelt der mindestens eine Winkelgeber 18 einen zur Schwenkposition gehörenden Schwenkwinkel. Der Schwenkwinkel beträgt dann, wenn er auf die Nutzfläche 19 der Ladeplattform 12 bezogen ist, bei horizontal ausgerichteter Ladeplattform 12 null Grad. Ein solcher horizontaler Schwenkwinkel der Nutzfläche 19 der Ladeplattform 12 ist in den Fig. 2, 6, 7, 8, 10 und 11 gezeigt. Der Schwenkwinkel kann aber auch etwas größer als null Grad sein, so dass die Nutzfläche 19 zur Spitze 20 der Ladeplattform 12 hin leicht ansteigt. In der Regel wird eine solche Schwenkposition bzw. ein solcher Schwenkwinkel manuell angefahren, damit der Gegenstand 21, insbesondere wenn er sich auf einem Rollwagen befindet, nicht von der Ladeplattform 12 herunterfährt bzw. runterrutscht und weil durch das Gewicht des Gegenstands 21 die damit beladene Ladeplattform 12 durch elastische Verformung bzw. Einfederung des Fahrzeugs 10 ihren Winkel dahingehend ändert, dass die Spitze 20 unter dem Gewicht des Gegenstands 21 absinkt. Dieses Absinken ist in der Fig. 3 durch die mit gestrichelten Linien angedeutete Ladeplattform 12 angedeutet, während der manuell angefahrene Schwenkwinkel der unbeladenen Ladeplattform 12 in dieser Figur gestrichelt dargestellt ist.

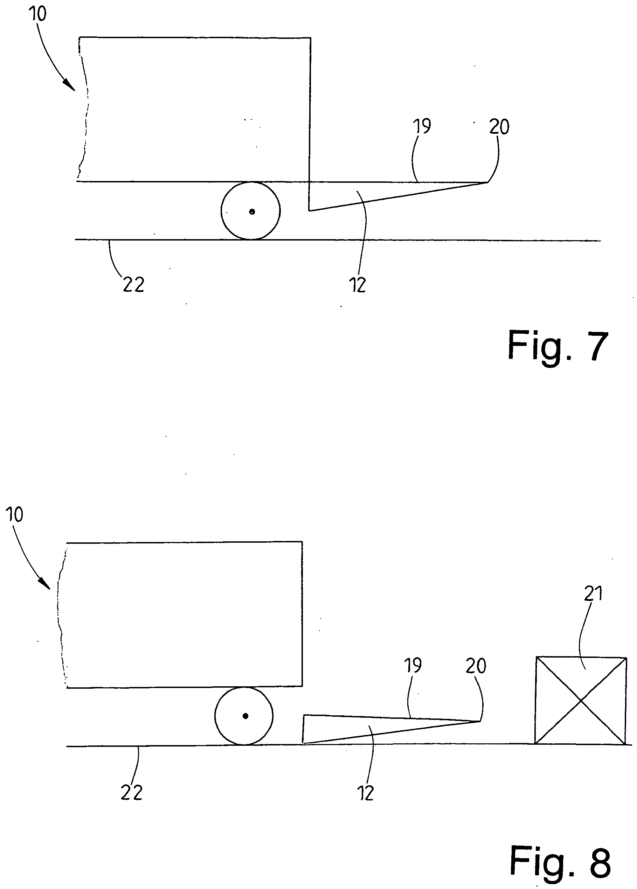

Es ist vorgesehen, die manuell zu Anfang des Be- oder Entladevorgangs angefahrene Schwenkposition, und zwar den dazugehörenden Schwenkwinkel, von dem mindestens einen Winkelgeber 18 bei unbeladener Ladeplattform 12 zu ermitteln. Der Schwenkwinkel der unbeladenen Ladeplattform wird vom Winkelgeber 18 sowohl beim Beladen der Ladeplattform 12 von der Ladefläche des Fahrzeugs 10 aus, was durch die Fig. 2 bis 6 verdeutlicht wird, ermittelt als auch beim Beladen der Ladeplattform 12 vom Boden 22 aus gemäß den Fig. 7 bis 11.

Wenn gemäß den Fig. 2 bis 6 die Ladeplattform 12 vom Fahrzeug aus mit dem Gegenstand 21 beladen wird, vergeht vom manuellen Einstellen der Schwenkposition des Schwenkwinkels der Ladeplattform 12 bis zum Beladen der Ladeplattform 12 mit dem Gegenstand 21 einige Zeit. In dieser Zeit erfolgt keine Betätigung der Hubladebühne, so dass die Ladeplattform 12 nicht verschwenkt und auch nicht abgesenkt wird. Diese Zeit kann genutzt werden, um vom Winkelgeber 18 bei noch in der anfänglichen Schwenkposition befindlicher leerer, also unbelasteter, Ladeplattform 12 den Schwenkwinkel derselben unverfälscht zu ermitteln, und zwar trotz des bei der Messung durch Schwingungen des bewegten Teils des Winkelgebers 18 sich ändernde Stellungen dieses bewegten Teils des Winkelgebers 18. Dies geschieht bevorzugt nach dem zuvor beschriebenen Verfahren durch zeitlich aufeinanderfolgende Aufnahme mehrerer Messwerte durch den Winkelgeber 18 und Ermittlung des genauen Schwenkwinkels durch bevorzugt Durchschnitts- oder Mittelwertbildung aus den vom mindestens einen Winkelgeber 18 aufgenommenen Messwerten. Diese Mittelwertbildung erfolgt in der Steuerung, worin dann der exakt gemessene Schwenkwinkel so, wie er von der Bedienungsperson vorher manuell eingestellt worden ist, abgespeichert wird.

Nachdem die Messung des Schwenkwinkels der Ladeplattform 12 abgeschlossen ist, was zu einem Zeitpunkt geschieht, zu dem der Gegenstand 21 noch nicht auf die Ladeplattform 12 aufgebracht sein kann, gelangt der Gegenstand 21 auf die Nutzfläche 19 der Ladeplattform 12. Dabei federt durch das Gewicht die Ladeplattform 12 ein, indem sich die Neigung der Ladeplattform 12 ändert. Dies geschieht gemäß der Fig. 3 so, dass die Spitze 20 der beladenen Ladeplattform 12 sich gegenüber der Spitze 20 der unbeladenen Ladeplattform 12 (gestrichelt in der Fig. 3 dargestellt) absenkt. Im gezeigten Ausführungsbeispiel verläuft dabei die Nutzfläche 19 der Ladeplattform 12 leicht geneigt zur Spitze 20. Wenn das nicht gewünscht sein sollte, kann manuell eine solche Schwenkposition angefahren werden, bei der die Nutzfläche 19 zur Spitze 20 leicht ansteigt, so dass nach dem Beladen der Ladeplattform 12 die Nutzfläche 19 zur Spitze 20 hin nicht so stark abfällt oder im Idealfall die Nutzfläche 19 horizontal verläuft.

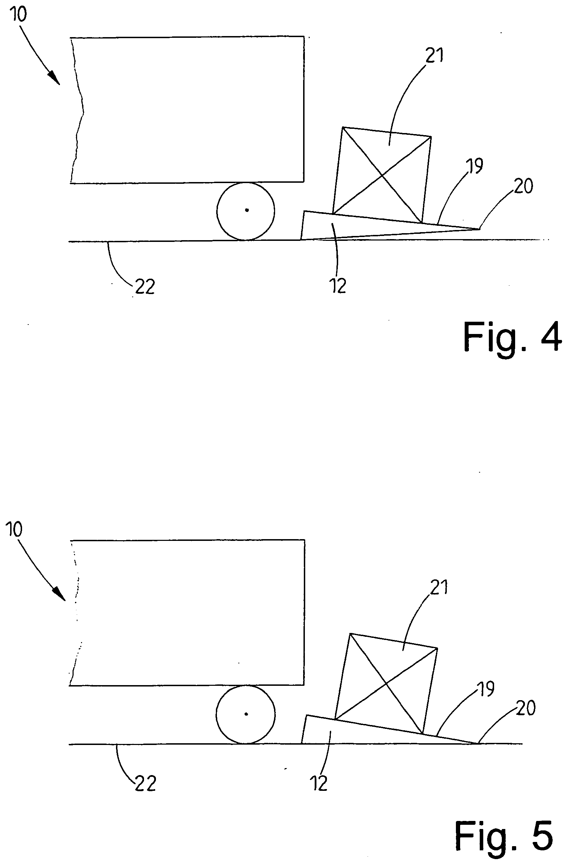

Nach dem Beladen wird die Ladeplattform 12 auf den Boden 22 abgesenkt. Infolge der Keilform der Ladeplattform 12 gelangt dabei nur die Unterseite einer zum Fahrzeug 10 weisenden Querkante der Ladeplattform 12 auf den Boden 22. Dabei ist die Spitze 20 der Ladeplattform 12 noch vom Boden 22 beabstandet, was es noch nicht zulässt, den Gegenstand 21 von der Ladeplattform 12 herunterzubewegen (Fig. 4). Aus diesem Grunde erfolgt eine sogenannte Bodenagleichung oder auch Flurkantenanpassung, indem die Ladeplattform 12 verschwenkt wird, bis die Spitze 20 auf dem Boden 22 anliegt (Fig. 5). Die Nutzfläche 19 der Ladeplattform 12 geht nun im Wesentlichen übergangslos an den Boden 22 über zum Herunterfahren des Gegenstands 21 von der Ladeplattform 12.

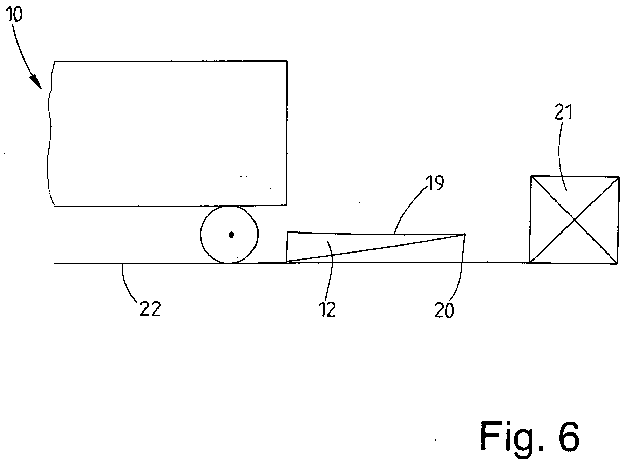

Nachdem die Ladeplattform 12 leer ist, wird sie von der Steuerung automatisch zur Rückgängigmachung der Bodenangleichung zurückgeschwenkt, und zwar bis zum Erreichen der vom Winkelgeber 18 bei unbeladener Ladeplattform 12 ermittelten, anfangs einmal manuell angefahrenen Schwenkwinkel der Ladeplattform 12 (Fig. 6). Anschließend wird die leere Ladeplattform 12 hochgefahren, wonach sie die Ausgangsposition der Fig. 2 wieder erreicht hat und der Schwenkwinkel der Ladeplattform der gleiche ist wie in der Fig. 2, nämlich dem zu Beginn des Entladevorgangs des Fahrzeugs 10 manuell angefahrenen Schwenkwinkel der leeren Ladeplattform 12 entspricht.

Die Fig. 7 bis 11 zeigen den Fall, bei dem das Fahrzeug 10 mit dem Gegenstand 21 beladen wird. In diesem Falle wird die Ladeplattform 12 nach dem Aufschwenken und das manuelle Anfahren der Schwenkposition bzw. des Schwenkwinkels sofort abgesenkt. Zwischen dem manuellen Anfahren der Schwenkposition der Ladeplattform 12 und ihrem Absenken befindet sich keine Stillstandszeit der Ladeplattform 12, die zum zuverlässigen Ermitteln des Schwenkwinkels der Ladeplattform 12 genutzt werden könnte. Deswegen wird die leere Ladeplattform 12 sofort von der in der Fig. 7 gezeigten Ausgangsstellung mit dem manuell angefahrenen Schwenkwinkel auf den Boden 22 abgesenkt. Dabei trifft wiederum nur die Unterseite der zum Fahrzeug gerichteten Querkante der keilförmigen Ladeplattform 12 auf den Boden 22 auf. Die Spitze 20 der Ladeplattform 12 befindet sich dann noch mit Abstand über dem Boden 22 (Fig. 8). Bevor nun die Ladeplattform 12 zur Bodenangleichung erneut verschwenkt wird, wird wiederum bei leerer Ladeplattform, die nun aber nur mit ihrer zum Fahrzeug gerichteten Querkante auf dem Boden 22 aufliegt, vom Winkelgeber 18 der Schwenkwinkel der Ladeplattform 22 ermittelt. Der Schwenkwinkel der Ladeplattform 12 kann nun zuverlässig ermittelt werden, weil sich die abgesenkte Ladeplattform 12 mit der zum Fahrzeug 10 gerichteten Querkante auf dem Boden 22 abstützt und somit weder die Ladeplattform 12 noch der Winkelgeber 18 schwingen. Deswegen braucht bei abgesenkter Ladeplattform 12 der Winkelgeber 18 nur einen einzigen dem Schwenkwinkel der Ladeplattform 12 entsprechenden Winkelwert zu ermitteln. Das kann sehr rasch erfolgen, so dass nach dem Absenken der Ladeplattform 12 auf den Boden 22 sofort die Bodenangleichung der Ladeplattform 12 erfolgen kann, wobei die Spitze 20 auf den Boden 22 gelangt.

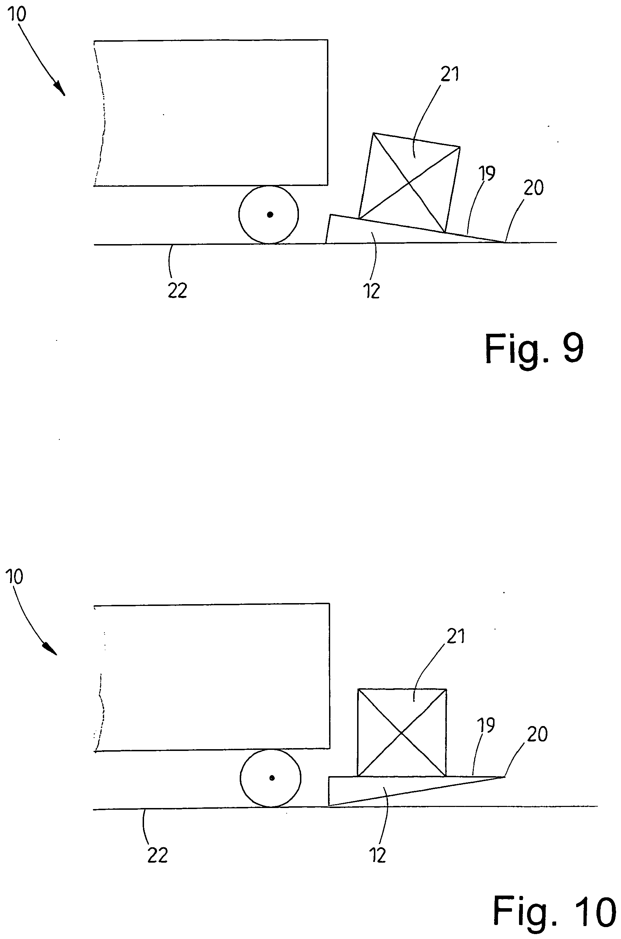

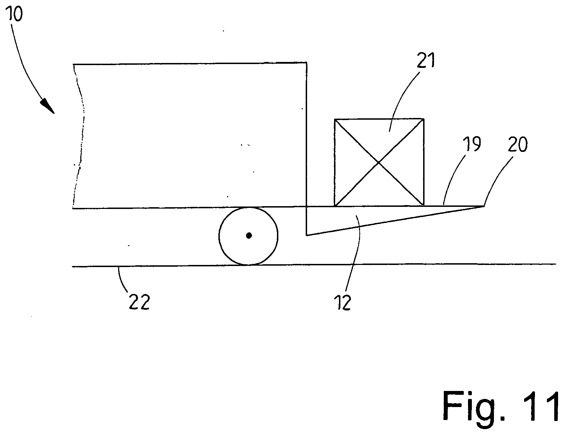

Nun wird die Ladeplattform 12 mit dem Gegenstand 21 beladen (Fig. 9). Danach wird die Bodenangleichung automatisch wieder rückgängig gemacht, indem die Steuerung selbsttätig den zuvor gespeicherten Schwenkwinkel der leeren Ladeplattform 12 wieder anfährt, und zwar mit dem Gegenstand 21 (Fig. 10). Die Gewichtskraft des Gegenstands 21 beeinflusst dadurch den Schwenkwinkel der Ladeplattform 12 nicht. Diese wird auch bei unter der Last des Gegenstands 21 hervorgerufene Federungen oder Verformungen der Hubladebühne 11 mit der Ladeplattform 12 in die anfangs manuell eingestellte Schwenkposition der leeren Ladeplattform 12 gebracht. Durch anschließendes Anheben der Ladeplattform 12 wird der Gegenstand 21 auf das Niveau der Ladefläche des Fahrzeugs 10 gebracht (Fig. 11). Dabei entspricht der Schwenkwinkel der Ladeplattform 12 demjenigen, der zu Beginn des Beladevorgangs des Fahrzeugs 10 manuell von der Bedienungsperson nach dem Öffnen der Ladeplattform 12 angefahren worden ist (Fig. 7).

Aus der vorstehenden Verfahrensweise wird deutlich, dass der jeweilige Winkelgeber 18 den manuell zu Beginn des Lade- oder Endladevorgangs angefahrenen Schwenkwinkel der Ladeplattform 12 stets bei unbeladener Ladeplattform 12 ermittelt, und zwar entweder bei noch nicht abgesenkter Ladeplattform (Fig. 2) oder bei abgesenkter Ladeplattform 12 (Fig. 8) vor der Bodenangleichung. In beiden Fällen wird der manuell angefahrene Schwenkwinkel bei leerer Ladeplattform 12 ermittelt. Die Entscheidung, ob der manuell angefahrene Schwenkwinkel der Ladeplattform 12 vor dem Absenken (Fig. 2) oder nach dem Absenken (Fig. 8) ermittelt wird, erfolgt danach, wie lange die Ladeplattform 12 in der Schwenkposition verbleibt, bevor sie abgesenkt wird. Wenn diese Zeit eine vorbestimmte Zeitspanne, beispielsweise 5 bis 20 Sekunden, vorzugsweise 10 Sekunden, überschreitet, deutet das darauf hin, dass die Ladeplattform 12 vom Fahrzeug 10 aus beladen werden soll, weil ein solches Beladen einige Zeit erfordert und dadurch die Ladeplattform nicht sogleich nach dem Erreichen der Schwenkposition abgesenkt wird. Wenn hingegen sofort im Anschluss an das manuelle Verschwenken der Ladeplattform in die Schwenkposition auch ein Absenken der Ladeplattform 12 erfolgt, deutet das auf ein Beladen der Ladeplattform 12 am Boden 22 hin. Dann kann der Schwenkwinkel vom Winkelgeber 18 bei auf dem Boden aufliegender Ladeplattform 12 vor der Bodenangleichung ermittelt werden. Infolge der dabei teilweise auf dem Boden aufliegenden Ladeplattform 12 kommt es zu keinen Schwingungen im Winkelgeber 18, so dass bei abgesenkter, leerer Ladeplattform 12 sehr rasch der Schwenkwinkel vom Winkelgeber 18 exakt ermittelt werden kann, so dass ohne nennenswerten Zeitverlust nach dem Absenken der Ladeplattform sogleich die Bodenangleichung vorgenommen werden kann.

### Bezugszeichenliste:

- 10: Fahrzeug
- 11: Hubladebühne
- 12: Ladeplattform
- 13: Hubwerk
- 14: Traverse
- 15: Druckmittelzylinder
- 16: Druckmittelzylinder
- 17: Bedienteil
- 18: Winkelgeber
- 19: Nutzfläche
- 20: Spitze
- 21: Gegenstand
- 22: Boden

## Patentansprüche

1. Verfahren zum Steuern einer eine verschwenk-, heb- und/oder senkbare Ladeplattform (12) aufweisenden Hubladebühne (11), wobei mindestens eine Position der Ladeplattform (12) ermittelt wird, indem mehrere von einem Winkelgeber (18) zeitlich nacheinander ermittelte Messwerte zum Ermitteln einer bestimmten Position der Ladeplattform (12) herangezogen werden, **dadurch gekennzeichnet, dass** vom Winkelgeber (18) bei unbetätigter Ladeplattform (12) nacheinander mehrere Winkelwerte ermittelt werden und hieraus durch Mittelwertbildung ein Durchschnittswert gebildet wird, der dem Schwenkwinkel der Ladeplattform (12) entspricht oder nahekommt.

2. Verfahren nach Anspruch 1, **dadurch gekennzeichnet, dass** die zeitlich aufeinanderfolgenden Messwerte vom Winkelgeber (18) ermittelt werden, während die Ladeplattform (12) weder verschwenkt noch angehoben oder abgesenkt wird.

3. Verfahren nach Anspruch 1, **dadurch gekennzeichnet, dass** die Schwenkposition der unbeladenen Ladeplattform (12) ermittelt wird.

4. Verfahren nach Anspruch 1 oder 2, **dadurch gekennzeichnet, dass** eine Schwenkposition, insbesondere ein Schwenkwinkel, manuell angefahren wird, nach Erreichen der gewünschten Schwenkposition oder des gewünschten Schwenkwinkels eine Zeit lang gewartet wird und danach innerhalb einer bestimmten Zeitspanne mehrmals nacheinander vom Winkelgeber (18) Messwerte aufgenommen und hieraus rechnerisch ein genauer oder mindestens annähernd genauer Schwenkwinkel ermittelt wird, wobei dieser Schwenkwinkel abgespeichert und später automatisch wieder angefahren wird.

5. Verfahren nach einem oder mehreren der Ansprüche 1 bis 4, **dadurch gekennzeichnet, dass** der Winkelgeber (18) bei einem bestimmten manuell angefahrenen Schwenkwinkel der Ladeplattform (12) nacheinander mehrere Winkelwerte bei unbetätigter Ladeplattform (12) ermittelt.

6. Verfahren nach einem oder mehreren der Ansprüche 1 bis 5, **dadurch gekennzeichnet, dass** aus den bei unbetätigter Ladeplattform (12) von mindestens einem Winkelgeber (18) ermittelten Winkelwerten durch Mittelwertbildung, Interpolation oder Iteration der manuell angefahrene Schwenkwinkel der Ladeplattform (12) ermittelt wird.

7. Verfahren nach Anspruch 3, **dadurch gekennzeichnet, dass** die Schwenkposition vor dem Absenken der Ladeplattform (12) ermittelt wird, wenn die Ladeplattform (12) beladen abgesenkt wird und die Schwenkposition nach dem Absenken der Ladeplattform (12) ermittelt wird, wenn diese unbeladen abgesenkt wird.

8. Verfahren nach Anspruch 3 oder 7, **dadurch gekennzeichnet, dass** dann, wenn nach dem Erreichen der Schwenkposition die Ladeplattform (12) innerhalb einer bestimmten Zeitspanne abgesenkt wird, die Schwenkposition bei auf dem Boden (22) abgesenkter Ladeplattform (12) ermittelt wird.

9. Verfahren nach einem der vorhergehenden Ansprüche, **dadurch gekennzeichnet, dass** dann, wenn die Ladeplattform (12) in der Schwenkposition eine bestimmte Zeitspanne verbleibt, die Schwenkposition vor dem Absenken der Ladeplattform (12) ermittelt wird.

10. Verfahren nach einem der vorhergehenden Ansprüche, **dadurch gekennzeichnet, dass** die ermittelte und in einer Steuerung abgespeicherte Schwenkposition bei der Rückgängigmachung einer Bodenangleichung der Ladeplattform (12) und vor dem Anheben der Ladeplattform (12) von der Steuerung automatisch wieder angefahren wird.

## Claims

1. Method for controlling a cantilever lift (11) which has a pivotable, raisable and/or a lowerable loading platform (12), wherein at least one position of the loading platform (12) is determined by virtue of multiple measurement values determined temporally in succession by an angle sensor (18) being taken into consideration for the determination of a particular position of the loading platform (12), **characterized in that**, in a non-actuated state of the loading platform (12), the angle sensor (18) successively determines multiple angle values and, from these, an average value is formed by mean value formation, which average value corresponds or approximates to the pivot angle of the loading platform (12).

2. Method according to Claim 1, **characterized in that** the temporally successive measurement values are determined by the angle sensor (18) while the loading platform (12) is being neither pivoted nor raised nor lowered.

3. Method according to Claim 1, **characterized in that** the pivoting position of the unladen loading platform (12) is determined.

4. Method according to Claim 1 or 2, **characterized in that** a pivoting position, in particular a pivot angle, is adjusted to manually, a time is allowed to elapse after the desired pivoting position or the desired pivot angle is reached, and thereafter, within a particular time period, measurement values are recorded multiple times in succession by the angle sensor (18), and from these, an exact or at least approximately exact pivot angle is determined by calculation, wherein said pivot angle is stored and is later adjusted to automatically.

5. Method according to one or more of Claims 1 to 4, **characterized in that**, when the loading platform (12) is at a particular pivot angle that has been adjusted to manually, the angle sensor (18) successively determines multiple angle values in a non-actuated state of the loading platform (12).

6. Method according to one or more of Claims 1 to 5, **characterized in that** the pivot angle of the loading platform (12) that has been adjusted to manually is determined, by mean value formation, interpolation or iteration, from the angle values determined by at least one angle sensor (18) in a non-actuated state of the loading platform (12).

7. Method according to Claim 3, **characterized in that** the pivoting position is determined before the lowering of the loading platform (12) if the loading platform (12) is being lowered in a laden state, and the pivoting position is determined after the lowering of the loading platform (12) if the latter is being lowered in an unladen state.

8. Method according to Claim 3 or 7, **characterized in that**, if the loading platform (12) is lowered within a certain time period after the pivoting position has been reached, the pivoting position is determined when the loading platform (12) has been lowered onto the ground (22).

9. Method according to one of the preceding claims, **characterized in that**, if the loading platform (12) remains in the pivoting position for a certain period of time, the pivoting position is determined before the lowering of the loading platform (12).

10. Method according to one of the preceding claims, **characterized in that** the determined pivoting position, stored in a controller, is automatically adjusted to again by the controller during the reversal of a ground alignment of the loading platform (12) and before the raising of the loading platform (12).

## Revendications

1. Procédé pour commander une passerelle de chargement élévatrice (11) possédant une plate-forme de chargement (12) pivotante, levable et/ou abaissable, au moins une position de la plate-forme de chargement (12) étant déterminée en faisant appel à plusieurs valeurs mesurées déterminées chronologiquement par un codeur angulaire (18) en vue de déterminer une position donnée de la plate-forme de chargement (12), **caractérisé en ce que** plusieurs valeurs d'angle sont déterminées les unes après les autres par le codeur angulaire (18) lorsque la plate-forme de chargement (12) n'est pas actionnée et une valeur moyenne est formée à partir de celles-ci par un calcul de moyenne, laquelle correspond à l'angle de pivotement de la plate-forme de chargement (12) ou s'en approche.

2. Procédé selon la revendication 1, **caractérisé en ce que** les valeurs mesurées chronologiques sont déterminées par le codeur angulaire (18) pendant que la plate-forme de chargement (12) n'est ni pivotée, ni levée, ni abaissée.

3. Procédé selon la revendication 1, **caractérisé en ce que** la position de pivotement de la plate-forme de chargement (12) non chargée est déterminée.

4. Procédé selon la revendication 1 ou 2, **caractérisé en ce qu'**un déplacement jusqu'à une position de pivotement, notamment un angle de pivotement, est effectué manuellement, un temps d'attente est respecté après avoir atteint la position de pivotement souhaitée ou l'angle de pivotement souhaité et ensuite des valeurs mesurées sont acquises plusieurs fois les unes à la suite des autres par le codeur angulaire (18) pendant un intervalle de temps donné, puis un angle de pivotement plus précis ou au moins approximativement plus précis est déterminé mathématiquement à partir de celles-ci, vers lequel le déplacement s'effectue ensuite de nouveau automatiquement.

5. Procédé selon une ou plusieurs des revendications 1 à 4, **caractérisé en ce que** le codeur angulaire (18), lorsque la plate-forme de chargement (12) a été déplacée manuellement à un angle de pivotement donné, détermine les unes à la suite des autres plusieurs valeurs d'angle avec la plate-forme de chargement (12) non actionnée.

6. Procédé selon une ou plusieurs des revendications 1 à 5, **caractérisé en ce que** l'angle de pivotement atteint par déplacement manuel de la plate-forme de chargement (12) est déterminée à partir des valeurs d'angle déterminées par au moins un codeur angulaire (18) avec la plate-forme de chargement (12) non actionnée par calcul de la moyenne, interpolation ou itération.

7. Procédé selon la revendication 3, **caractérisé en ce que** la position de pivotement est déterminée avant l'abaissement de la plate-forme de chargement (12) lorsque la plate-forme de chargement (12) est abaissée chargée, et la position de pivotement est déterminée après l'abaissement de la plate-forme de chargement (12) lorsque celle-ci est abaissée non chargée.

8. Procédé selon la revendication 3 ou 7, **caractérisé en ce que** lorsque la plate-forme de chargement (12) est abaissée au sein d'un intervalle de temps donné après avoir atteint la, position de pivotement, la position de pivotement est déterminée avec la plate-forme de chargement (12) abaissée sur le sol (22).

9. Procédé selon l'une des revendications précédentes, **caractérisé en ce que** lorsque la plate-forme de chargement (12) demeure dans la position pivotée pendant un intervalle de temps donné, la position de pivotement est déterminée avant l'abaissement de la plate-forme de chargement (12).

10. Procédé selon l'une des revendications précédentes, **caractérisé en ce que** la position de pivotement déterminée et mise en mémoire dans une commande est regagnée automatiquement par la commande lors de l'annulation d'un alignement sur le sol de la plate-forme de chargement (12) et avant le levage de la plate-forme de chargement (12).
